# EUROPÄISCHE PATENTSCHRIFT

(11) **EP 1 289 787 B1**
(45) Veröffentlichungstag und Bekanntmachung des Hinweises auf die Patenterteilung: **19.04.2006**
(21) Anmeldenummer: 01944962.8
(22) Anmeldetag: 30.05.2001
(51) Int. Cl.: B60J 5/04

(54) **SCHWENKTÜRFLÜGEL FÜR FAHRZEUGE DES ÖFFENTLICHEN PERSONENNAHVERKEHRS, INSBESONDERE FÜR BUSSE**
PIVOTING DOOR LEAF FOR VEHICLES USED FOR LOCAL PUBLIC TRANSPORT OF PASSENGERS, ESPECIALLY BUSES
BATTANT DE PORTE PALIERE DESTINE A DES VEHICULES DE TRANSPORT DE PERSONNES LOCAL, EN PARTICULIER DES BUS

(30) Priorität: 14.06.2000 DE 10029275
(43) Veröffentlichungstag der Anmeldung: 12.03.2003
(73) Patentinhaber: Gebr. Bode GmbH & Co. KG, 34123 Kassel (DE)
(72) Erfinder: KOCH, Peter, 37235 Hessisch Lichtenau (DE)
(74) Vertreter: Feder, Wolf-Dietrich
(86) Internationale Anmeldenummer: PCT/DE2001/002056
(87) Internationale Veröffentlichungsnummer: WO 2001/096132

(56) Entgegenhaltungen:
- EP-A- 0 873 898
- DE-B- 1 209 010
- DE-U- 8 009 490
- DE-U- 20 000 873

## Beschreibung

Die Erfindung betrifft einen Schwenktürflügel für Fahrzeuge des öffentlichen Personennahverkehrs, insbesondere für Busse, mit den Merkmalen aus dem Oberbegriff des Patentanspruchs 1. Ein derartiger Schwenktürflügel ist bekannt und beispielsweise in DE 200 00 873 U1 beschrieben.

Bei diesem bekannten Schwenktürflügel und ebenso bei einem aus DE 80 09 490 U1 bekannten Schwenktürflügel wird beim Öffnen des Schwenktürflügels die Abdichtleiste um eine parallel zur Unterkante verlaufende Drehachse nach außen geschwenkt, so daß sie sich in der nach außen geschwenkten Stellung gegenüber der Ausgangslage um 90° gedreht hat und somit relativ weit über den Schwenktürflügel nach außen herausragt.

Der Erfindung liegt die Aufgabe zugrunde, einen Schwenktürflügel mit den im Oberbegriff des Patentanspruchs 1 angegebenen Merkmalen so auszubilden, daß er einerseits eine wenig aufwendige, stabile und störungssichere Konstruktion aufweist, leicht montierbar ist und bei dem im geöffneten Zustand die nach außen hochgeschwenkte Abdichtleiste nur wenig über die untere äußere Kante des Schwenktürflügels herausragt. Weiterhin sollte die Konstruktion leicht montierbar und an Fahrzeugabmessungen anpaßbar sein und eine gute Abdichtung gewährleisten.

Die Lösung dieser Aufgabe geschieht erfindungsgemäß mit den Merkmalen aus dem kennzeichnenden Teil des Patentanspruchs 1 . Vorteilhafte Weiterbildungen der Erfindung sind in den abhängigen Ansprüchen beschrieben.

Der Grundgedanke der Erfindung besteht darin, beim Öffnen des Schwenktürflügels die Abdichtleiste nicht um eine fest mit dem Schwenktürflügel verbundene Achse nach außen hochzuschwenken, so daß sie im hochgeschwenkten Zustand senkrecht zur Aussenfläche des Schwenktürflügels steht, sondern die Abdichtleiste mittels eines Parallelogrammgestänges parallel zu sich selbst nach außen und hochzuschwenken, so daß sie im hochgeschwenkten Zustand parallel zur Außenfläche des Schwenktürflügels liegt. Die Konstruktion kann so bemessen werden, daß der Abstand der Abdichtleiste im hochgeschwenkten Zustand vom Schwenktürflügel relativ gering ist und somit nur eine geringe Ausladung zwischen der äußeren Kante der verschwenkten Abdichtleiste und der unteren äußeren Kante des Türflügels besteht. Die Betätigung der Abdichtleiste erfolgt im Prinzip wie bei den bekannten Anordnungen durch die Bewegung des unteren Schwenkarms beim Öffnen des Schwenktürflügels. Dieser untere Schwenkarm wirkt aber nicht direkt auf die Abdichtleiste, sondern auf einen Antriebshebel, der so mit dem Parallelogrammgestänge verbunden ist, daß, wenn er nach außen geschwenkt wird, das Parallelogrammgestänge angehoben wird und die Abdichtleiste nach außen und oben verschwenkt. Hierzu sind Antriebshebel und Anlenkhebel auf einer Welle drehfest miteinander verbunden und schließen einen durch die Kinematik bestimmten spitzen Winkel miteinander ein. Ein als "Stabilisator" bezeichneter weiterer Hebel, der unterhalb oder oberhalb des Antriebshebels lose gelagert ist, stabilisiert die Bewegung. Anlenkhebel und Stabilisator bilden somit die beiden Arme des Parallelogrammgestänges.

Neben dem geringen Herausragen der hochgeschwenkten Abdichtleiste über den Schwenktürflügel hat die erfindungsgemäße Einrichtung auch den Vorteil, daß sich die Abdichtleiste über die gesamte Breite des Türflügels erstrecken kann und somit zusätzliche Bauteile überflüssig werden.

Im folgenden wird anhand der beigefügten Zeichnungen ein Ausführungsbeispiel für einen Schwenktürflügel nach der Erfindung näher erläutert.

In den Zeichnungen zeigen:
Fig. 1 einen Vertikalschnitt senkrecht zur Türebene durch den Einstiegsbereich eines Busses im Bereich der Unterkante des Schwenktürflügels;
Fig. 2 in einer Ansicht aus dem Fahrzeuginneren im Einstiegsbereich nach Fig. 1 am hinteren unteren Ende eines Schwenktürflügels;
Fig. 3 in schematisierter Darstellung einen Horizontalschnitt durch den Gesamtürflügel nach Fig. 1 in geschlossener und geöffneter Stellung.

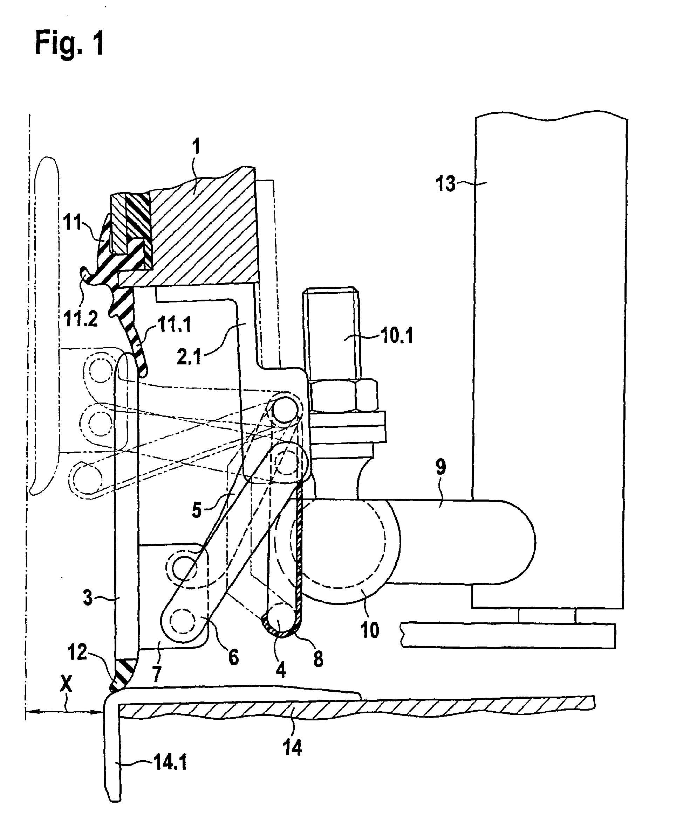

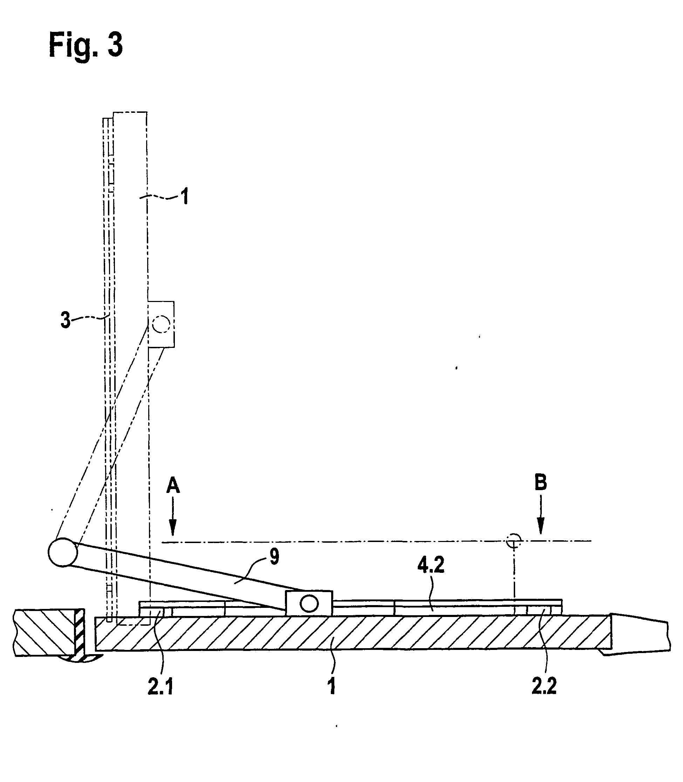

Als Ausführungsbeispiel wird eine im Prinzip aus zwei Schwenktürflügeln bestehende Innenschwenktür eines Busses dargestellt, wobei nur die Teile in den Zeichnungen dargestellt sind, die zur Erläuterung der Abdichtungseinrichtung an der Unterkante der Schwenktürflügel wichtig sind. So sieht man in Fig. 1 die Unterkante eines Schwenktürflügels 1, dessen Öffnen und Schließen in üblicher und an sich bekannter Weise von einer Drehsäule 13 aus erfolgt, die im Einstiegsbereich gelagert ist. Der Boden 14 des Fahrzeugs ist an der Einstiegskante von einem Trittprofil 14.1 umfaßt. Die Drehsäule 13 trägt einen oberen und einen unteren Schwenkarm, von denen der untere Schwenkarm 9 dargestellt ist. Dieser untere Schwenkarm 9 ist über ein Drehlager 10 mit einem Zapfen 10.1 in nicht genauer dargestellten Weise gelenkig mit dem Schwenktürflügel 1 verbunden. Wie aus Fig. 3 zu ersehen, wird der Schwenktürflügel 1 beim Verschwenken der Schwenkarme und unter der Wirkung nicht eigens dargestellter Führungen aus der in Fig. 3 mit durchgezogenen Linien dargestellten Geschlossenstellung in die mit strichpunktierten Linien dargestellte Offenstellung geführt.

An der Unterkante des Schwenktürflügels 1 ist eine Abdichtleiste 3 angeordnet, die sich über die ganze Breite des Schwenktürflügels 1 erstreckt und, wie aus Fig. 3 ersichtlich, an ihren beiden Enden an den mit A und B bezeichneten Punkten ihrer Länge mit dem Schwenktürflügel 1 schwenkbar verbunden ist. Hierzu ist am Schwenktürflügel 1 im Bereich der Punkte A und B jeweils ein Lagerbock 2.1 und 2.2 befestigt, und zwar, wie aus Fig. 1 am Beispiel des Lagerbocks 2.1 zu entnehmen, im dargestellten Ausführungsbeispiel an der Unterseite des Schwenktürflügels 1. Selbstverständlich kann der Lagerbock auch an der Innenseite des Schwenktürflügels 1 befestigt sein. Die Anlenkung der Abdichtleiste 3 am Lagerbock 2.1 ist in Fig. 1 genauer dargestellt.

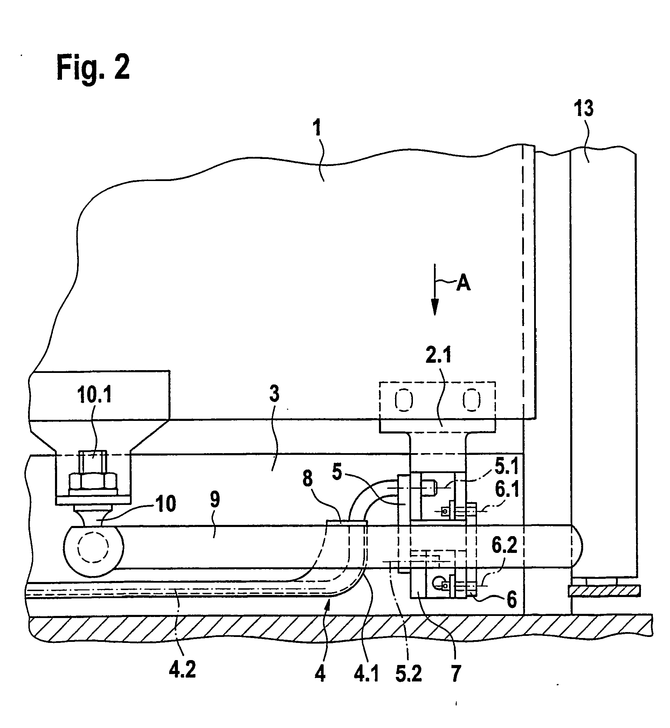

Die Abdichtleiste 3 ist am Lagerbock 2.1 über ein Parallelogrammgestänge aufgehängt, das einen Anlenkhebel 5 aufweist, der einerseits im Lagerbock 2.1 um eine Drehachse 5.1 drehbar und andererseits in einer an der Innenseite der Abdichtleiste 3 angebauten Aufnahme 7 um eine Drehachse 5.2 (Fig. 2) drehbar gelagert ist. Der als Stabilisator 6 dienende andere Arm des Parallelogrammgestänges ist im Lagerbock 2.1 um eine Drehachse 6.1 und in der Aufnahme 7 um eine Drehachse 6.2 drehbar gelagert. Mit der in der Drehachse 5.1 des Anlenkhebels 5 verlaufenden Welle ist drehfest ein Antriebshebel 4 verbunden, der, wie Fig. 2 zeigt, in einer Ebene parallel zur Schwenkebene des Anlenkhebels 5 verläuft und der mit diesem einen vorgegebenen spitzen Winkel einschließt, der durch die weiter unten genauer beschriebene Kinematik der Einrichtung bestimmt ist. Der Antriebshebel 4 weist, wie aus Fig. 1 zu ersehen, an seiner Innenseite, also der dem Fahrzeuginneren zugewandten Seite, ein Laufprofil 8 aus Kunststoff oder einem Elastomer auf. Die Anlenkpunkte des Antriebshebels 4 bzw. des Anlenkhebels 5 liegen oberhalb des Schwenkbereichs des unteren Schwenkarms 9. In der in Fig. 1 mit ausgezogenen Linien dargestellten Dichtstellung der Abdichtleiste 3 verläuft der in Fig. 1 sichtbare Teil des Antriebshebels 4 vertikal nach unten.

Wenn nun beim Öffnen des Schwenktürflügels 1 der untere Schwenkarm 9 seine Schwenkbewegung ausführt, stößt er an die Innenseite des Antriebshebels 4 und verschwenkt ihn aus der mit durchgezogenen Linien dargestellten Grundstellung um die Schwenkachse 5.1 nach außen. Mit ihm werden der Anlenkhebel 5 und der Stabilisator 6 um ihre Drehachsen 5.1 bzw. 6.1 verschwenkt und hierdurch die Abdichtleiste 3 aus der Abdichtstellung angehoben und parallel zu sich selbst nach außen verschwenkt bis in die in Fig. 1 mit strichpunktierter Linie dargestellte Endstellung, in der sie parallel zur Außenseite des Schwenktürflügels 1 liegt und in der ihre Unterkante oberhalb des Schwenkbereichs des unteren Schwenkarms 9 liegt. Durch eine geeignete Wahl der Abstands- und Winkelverhältnisse des Anlenkhebels 5 und des Antriebshebels 4 wird erreicht, daß der Abstand X in Fig. 1 zwischen der Einstiegskante und der Außenseite der hochgeschwenkten Abdichtleiste 3 kleingehalten werden kann.

Fig. 2 ist zu entnehmen, daß der Antriebshebel 4 zur Betätigung der Abdichtleiste 3 nicht nur das mit dem Lagerbock 2.1 verbundene Parallelogrammgestänge führt sondern auch das nicht dargestellte, am anderen Ende des Türflügels am Punkt B mit dem Lagerbock 2.2 verbundene Parallelogrammgestänge. Hierzu ist der Antriebshebel 4 als im wesentlichen U-förmiger Bügel ausgebildet, von dem in Fig. 2 die Basis zu 4.2 und der eine Schenkel 4.1 zu sehen sind. Dabei verläuft die Basis 4.2 parallel zur Schwenkachse 5.1 des Antriebshebels 4. Das Laufprofil 8 am Antriebshebel 4 minimiert Reibung und Abnutzung und ermöglicht einen leichten Lauf. Selbstverständlich kann auch der untere Schwenkarm 9 mit einem entsprechenden Laufprofil versehen sein. Der Antriebshebel 4 kann so ausgebildet und angeordnet sein, daß er bzw. seine Basis 4.2 in der Abdichtstellung bei geschlossenem Schwenktürflügel 1 im Bereich des Türlagers 10 unterhalb des unteren Schwenkarms 9 verläuft. Er kann aber auch so angeordnet sein, daß er in der Abdichtstellung von außen gesehen vor dem Türlager verläuft. Das Laufprofil 8 kann im Bereich des Türlagers 10 eine Ausnehmung aufweisen, um einen fehlerfreien Ablauf zu ermöglichen.

An der Unterkante der aus starrem Material, beispielsweise Metall oder Kunststoff bestehenden Abdichtleiste 3 ist ein Dichtungsblatt 12 aus elastomerem Material angeordnet, das sich in der Abdichtstellung der Abdichtleiste 3 auf das Trittprofil 14.1 auflegt, wodurch Klappergeräusche unterbunden werden und der Fahrzeuginnenraum gut abgedichtet wird.

Wie Fig. 1 zu entnehmen, ist an der Außenseite des Schwenktürflügels 1 im Bereich der Unterkante eine Dichtungsmanschette 11 angeordnet mit einer abwärtsgerichteten Dichtlippe 11.1, die sich in der Abdichtstellung der Abdichtleiste 3 an die Innenseite der Abdichtleiste anlegt und an dieser Stelle eine gute Abdichtung gewährleistet. An ihrer Außenseite weist die Dichtungsmanschette 11 oberhalb der Dichtlippe 11.1 ein rinnenartiges Profil 11.2 zur Aufnahme von vom Schwenktürflügel herablaufendem Wasser auf. Auch Spritzwasser wird weitestgehend durch die Dichtungsmanschette 11 vom Innenraum des Fahrzeugs ferngehalten. Der Bewegungsablauf der Abdichtleiste 3 wird durch die Dichtungsmanschette nicht behindert.

## Patentansprüche

1. Schwenktürflügel für Fahrzeuge des öffentlichen Personennahverkehrs, insbesondere für Busse, der mit Hilfe von durch eine vertikale Drehsäule betätigten Schwenkarmen nach innen verschwenkbar ist und an dessen Unterkante eine sich über die ganze Breite des Schwenktürflügels erstreckende, beim Öffnen des Schwenktürflügels mittels des unteren Schwenkarms aus einer Abdichtstellung, in der sie im wesentlichen fluchtend zur Außenseite des Schwenktürflügels steht, nach außen hochschwenkbare Abdichtleiste angeordnet ist, **dadurch gekennzeichnet, daß** die Abdichtleiste (3) an mindestens zwei Punkten (A, B) ihrer Länge über ein jeweils einen Anlenkhebel (5) und einen Stabilisator (6) aufweisendes Parallelogrammgestänge an einem fest mit dem Schwenktürflügel (1) verbundenen und unterhalb des Schwenktürflügels (1) fluchtend oder parlallel zu dessen Innenseite verlaufenden Lagerbock (2.1, 2.2) angelenkt ist, an dem weiterhin ein mit dem Anlenkhebel (5) in dessen Schwenkachse (5.1) drehfest verbundener, in einer Ebene parallel zur Schwenkebene des Anlenkhebels (5) liegender und mit diesem einen vorgegebenen spitzen Winkel einschließender Antriebshebel (4) derart angelenkt ist, daß in der Abdichtstellung der Abdichtleiste (3) mindestens ein Teil des Antriebshebels (4) im wesentlichen vertikal nach unten verläuft und im unterhalb seiner Drehachse verlaufenden Schwenkbereich des unteren Schwenkarms (9) liegt.

2. Schwenktürflügel nach Anspruch 1, **dadurch gekennzeichnet, daß** im Parallelogrammgestänge der Stabilisator (6) unterhalb des Anlenkhebels (5) angeordnet ist.

3. Schwenktürflügel nach Anspruch 2, **dadurch gekennzeichnet, daß** die Drehachsen (5.1, 6.1) sowohl des Anlenkhebels (5) bzw. Antriebshebels (4) als auch des Stabilisators (6) am Lagerbock (2.1) oberhalb des Schwenkbereichs des unteren Schwenkarms (9) liegen.

4. Schwenktürflügel nach einem der Ansprüche 1 bis 3, **dadurch gekennzeichnet, daß** die Anlenkung der Abdichtleiste (3) an das Parallelogrammgestänge (5-6) über eine in die Abdichtleiste integrierte Aufnahme erfolgt.

5. Schwenktürflügel nach einem der Ansprüche 1 bis 3, **dadurch gekennzeichnet, daß** die Anlenkung der Abdichtleiste (3) an das Parallelogrammgestänge (5-6) über eine an die Abdichtleiste (3) angebaute Aufnahme (7) erfolgt.

6. Schwenktürflügel nach einem der Ansprüche 1 bis 5, **dadurch gekennzeichnet, daß** der Antriebshebel (4) an seiner dem Innenraum des Fahrzeugs zugewandten Seite mit einem Laufprofil (8) aus Kunststoff oder einem elastomeren Material versehen ist.

7. Schwenktürflügel nach einem der Ansprüche 1 bis 6, **dadurch gekennzeichnet, daß** der untere Schwenkarm an seiner dem Antriebshebel zugewandten Seite mit einem Laufprofil aus Kunststoff oder einem elastomeren Material versehen ist.

8. Schwenktürflügel nach den Ansprüchen 6 oder 7, **dadurch gekennzeichnet, daß** das Laufprofil (8) im Bereich des Türlagers (10) eine Aussparung aufweist.

9. Schwenktürflügel nach einem der Ansprüche 1 bis 8, **dadurch gekennzeichnet, daß** der Antriebshebel (4) als im wesentlichen U-förmiger Bügel ausgebildet ist, der mit mindestens zwei Anlenkhebeln (5) an unterschiedlichen Punkten (A, B) auf der Länge der Abdichtleiste (3) verbunden ist, wobei die Basis (4.2) des U parallel zur Schwenkachse (5.1) des Antriebshebels (4) verläuft.

10. Schwenktürflügel nach Anspruch 9, **dadurch gekennzeichnet, daß** die Basis (4.2) des U in der Abdichtstellung bei geschlossenem Schwenktürflügel (1) mindestens im Bereich des Türlagers (10) unterhalb des Schwenkbereichs des unteren Schwenkarms (9) verläuft.

11. Schwenktürflügel nach Anspruch 9, **dadurch gekennzeichnet, daß** die Basis des U in der Abdichtstellung bei geschlossenem Schwenktürflügel von außen gesehen vor dem Türlager verläuft.

12. Schwenktürflügel nach einem der Ansprüche1 bis 11, **dadurch gekennzeichnet, daß** die Anordnung und Ausbildung des Parallelogrammgestänges (5-6) derart ist, daß die Unterkante der Abdichtleiste (3) in der angehobenen Stellung oberhalb des Schwenkbereichs des unteren Schwenkarms (9) liegt.

13. Schwenktürflügel nach einem der Ansprüche1 bis 12, **dadurch gekennzeichnet, daß** an der Außenseite des Schwenktürflügels (1) im Bereich der Unterkante eine Dichtungsmanschette (11) angeordnet ist mit einer abwärtsgerichteten Dichtlippe (11.1), die sich in der Abdichtstellung der Abdichtleiste (3) an die Innenseite der Abdichtleiste (3) anlegt.

14. Schwenktürflügel nach Anspruch 13, **dadurch gekennzeichnet, daß** die Dichtungsmanschette (11) an ihrer Außenseite oberhalb der Dichtlippe (11.1) ein rinnenartiges Profil (11.2) zur Aufnahme von vom Schwenktürflügel (1) ablaufendem Wasser aufweist.

15. Schwenktürflügel nach einem der Ansprüche1 bis 14, **dadurch gekennzeichnet, daß** an der Unterkante der aus starrem Material bestehenden Abdichtleiste (3) ein Dichtungsblatt (12) aus elastomerem Material angeordnet ist.

## Claims

1. A swivelling door leaf for vehicles used for local public passenger transport, in particular for buses, which may be swivelled inwards by means of swivel arms actuated by a vertical rotating column and at the lower edge of which there is arranged a sealing strip which extends over the entire width of the swivelling door leaf and which may be swivelled up and out on opening of the swivelling door leaf by means of the lower swivel arm out of a sealing position, in which it is substantially flush with the outside of the swivelling door leaf, **characterised in that** the sealing strip (3) is coupled at at least two points (A, B) along its length by means of a parallelogram rod assembly in each case comprising a coupling lever (5) and a stabiliser (6) to a pivot bracket (2.1, 2.2) connected firmly with the swivelling door leaf (1) and extending beneath the swivelling door leaf (1) flush therewith or parallel to the inside thereof, to which pivot bracket (2.1, 2.2) a drive lever (4), connected non-rotatably with the coupling lever (5) in the swivel axis (5.1) thereof, lying in a plane parallel to the swivelling plane of the coupling lever (5) and forming a given acute angle therewith is further coupled in such a way that, when the sealing strip (3) is in the sealing position, at least part of the drive lever (4) extends substantially vertically downwards and lies in the swivelling area of the lower swivel arm (9) extending beneath the axis of rotation thereof.

2. A swivelling door leaf according to claim 1, **characterised in that** the stabiliser (6) is arranged beneath the coupling lever (5) in the parallelogram rod assembly.

3. A swivelling door leaf according to claim 2, **characterised in that** the axes of rotation (5.1, 6.1) both of the coupling lever (5) and drive lever (4) and of the stabiliser (6) respectively lie on the pivot bracket (2.1) above the swivelling area of the lower swivel arm (9).

4. A swivelling door leaf according to any one of claims 1 to 3, **characterised in that** the sealing strip (3) is coupled to the parallelogram rod assembly (5-6) via a receptacle incorporated into the sealing strip.

5. A swivelling door leaf according to any one of claims 1 to 3, **characterised in that** the sealing strip (3) is coupled to the parallelogram rod assembly (5-6) via a receptacle (7) fitted onto the sealing strip (3).

6. A swivelling door leaf according to any one of claims 1 to 5, **characterised in that** the drive lever (4) is provided on its side facing the interior of the vehicle with a running profile (8) of plastics or an elastomeric material.

7. A swivelling door leaf according to any one of claims 1 to 6, **characterised in that** the lower swivel arm is provided on its side facing the drive lever with a running profile of plastics or an elastomeric material.

8. A swivelling door leaf according to claims 6 or 7, **characterised in that** the running profile (8) comprises a recess in the area of the door bearing (10).

9. A swivelling door leaf according to any one of claims 1 to 8, **characterised in that** the drive lever (4) takes the form of a substantially U-shaped stirrup piece, which is connected to at least two coupling levers (5) at different points (A, B) along the length of the sealing strip (3), wherein the base (4.2) of the U extends parallel to the swivel axis (5.1) of the drive lever (4).

10. A swivelling door leaf according to claim 9, **characterised in that** the base (4.2) of the U extends beneath the swivelling area of the lower swivel arm (9) at least in the area of the door bearing (10) in the sealing position when the swivelling door leaf (1) is closed.

11. A swivelling door leaf according to claim 9, **characterised in that** the base of the U extends in front of the door bearing when viewed from outside in the sealing position when the swivelling door leaf is closed.

12. A swivelling door leaf according to any one of claims 1 to 11, **characterised in that** the arrangement and construction of the parallelogram rod assembly (5-6) are such that the lower edge of the sealing strip (3) lies above the swivelling area of the lower swivel arm (9) in the raised position.

13. A swivelling door leaf according to any one of claims 1 to 12, **characterised in that** a sealing collar (11) is arranged on the outside of the swivelling door leaf (1) in the area of the lower edge, said sealing collar (11) having a downwardly directed sealing lip (11.1) which rests against the inside of the sealing strip (3) when the sealing strip (3) is in the sealing position.

14. A swivelling door leaf according to claim 13, **characterised in that** the sealing collar (11) comprises a gutter-like profile (11.2) on its outside above the sealing lip (11.1) to receive water running off the swivelling door leaf (1).

15. A swivelling door leaf according to any one of claims 1 to 14, **characterised in that** a sealing leaf (12) of elastomeric material is arranged at the lower edge of the sealing strip (3) consisting of rigid material.

## Revendications

1. Battant de porte pivotante pour véhicules du service de transport public à courte distance, en particulier pour des bus, qui peut basculer vers l'intérieur à l'aide de bras pivotants actionnés par une colonne tournante verticale et sur le bord inférieur duquel est disposée une baguette d'étanchéité s'étendant sur toute la largeur du battant de porte pivotante, pouvant être relevée vers l'extérieur lors de l'ouverture du battant de porte pivotante au moyen du bras pivotant inférieur à partir d'une position d'étanchéité, dans laquelle il est sensiblement aligné avec le côté extérieur du battant de porte pivotante, **caractérisé en ce que** la baguette d'étanchéité (3) est articulée en au moins deux points (A, B) de leur longueur au moyen d'une tringle à parallélogramme présentant respectivement un levier d'articulation (5) et un stabilisateur (6) sur un support de palier (2.1, 2.2), relié de façon fixe au battant de porte pivotante (1) et agencé de façon alignée au-dessous du battant de porte pivotante (1) ou parallèle à son côté extérieur, support sur lequel est articulé également un levier d'entraînement (4) relié de façon solidaire en rotation au levier d'articulation (5) dans son axe de pivotement (5.1) disposé dans un plan parallèlement au plan de pivotement du levier d'articulation (5) et formant avec celui-ci un angle aigu prédéfini, de telle sorte que, dans la position d'étanchéité de la baguette d'étanchéité (3), au moins une partie du levier d'entraînement (4) est agencée sensiblement verticalement vers le bas et est disposée dans la zone de pivotement, agencée au-dessous de son axe de rotation, du bras pivotant (9) inférieur.

2. Battant de porte pivotante selon la revendication 1, **caractérisé en ce que** le stabilisateur (6) est disposé dans la tringle à parallélogramme au-dessous du levier d'articulation (5).

3. Battant de porte pivotante selon la revendication 2, **caractérisé en ce que** les axes de rotation (5.1, 6.1) aussi bien du levier d'articulation (5) ou du levier d'entraînement (4) que du stabilisateur (6) sont disposés sur le support de palier (2.1) au-dessus de la zone de pivotement du bras pivotant (9) inférieur.

4. Battant de porte pivotante selon l'une quelconque des revendications 1 à 3, **caractérisé en ce que** l'articulation de la baguette d'étanchéité (3) sur la tringle à parallélogramme (5-6) s'effectue au moyen d'un logement intégré dans la baguette d'étanchéité.

5. Battant de porte pivotante selon l'une quelconque des revendications 1 à 3, **caractérisé en ce que** l'articulation de la baguette d'étanchéité (3) sur la tringle à parallélogramme (5-6) s'effectue au moyen d'un logement (7) rapporté sur la baguette d'étanchéité (3).

6. Battant de porte pivotante selon l'une quelconque des revendications 1 à 5, **caractérisé en ce que** le levier d'entraînement (4) est doté sur son côté tourné vers l'intérieur du véhicule d'un profilé de déplacement (8) à base de matière synthétique ou d'un matériau élastomère.

7. Battant de porte pivotante selon l'une quelconque des revendications 1 à 6, **caractérisé en ce que** le bras pivotant inférieur est doté sur son côté tourné vers le levier d'entraînement d'un profilé de déplacement à base de matière synthétique ou d'un matériau élastomère.

8. Battant de porte pivotante selon les revendications 6 ou 7, **caractérisé en ce que** le profilé de déplacement (8) présente un évidement dans la zone du support de porte (10).

9. Battant de porte pivotante selon l'une quelconque des revendications 1 à 8, **caractérisé en ce que** le levier d'entraînement (4) est réalisé comme un étrier sensiblement en forme de U, qui est relié à au moins deux leviers d'articulation (5) en différents points (A, B) sur la longueur de la baguette d'étanchéité (3), la base (4.2) du U étant parallèle à l'axe de pivotement (5.1) du levier d'entraînement (4).

10. Battant de porte pivotante selon la revendication 9, **caractérisé en ce que** la base (4.2) du U est agencé dans la position d'étanchéité, lorsque le battant de porte pivotante (1) est fermé, au moins dans la zone du support de porte (10) au-dessous de la zone de pivotement du bras pivotant (9) inférieur.

11. Battant de porte pivotante selon la revendication 9, **caractérisé en ce que** la base du U est agencée dans la position d'étanchéité, lorsque le battant de porte pivotante est fermé, avant le support de porte vu de l'extérieur.

12. Battant de porte pivotante selon l'une quelconque des revendications 1 à 11, **caractérisé en ce que** l'agencement et la réalisation de la tringle à parallélogramme (5-6) est tel que le bord inférieur de la baguette d'étanchéité (3) dans la position soulevée située au-dessus de la zone de pivotement du bras pivotant (9) inférieur.

13. Battant de porte pivotante selon l'une quelconque des revendications 1 à 12, **caractérisé en ce que** sur le côté extérieur du battant de porte pivotante (1) est disposée dans la zone de l'arête inférieure une garniture d' étanchéité (11) avec une lèvre d'étanchéité (11.1) orientée vers le bas, qui s'appuie, dans la position d'étanchéité de la baguette d'étanchéité (3) sur le côté intérieur de la baguette d'étanchéité (3).

14. Battant de porte pivotante selon la revendication 13, **caractérisé en ce que** la garniture d'étanchéité (11) présente sur son côté extérieur au-dessus de la lèvre d'étanchéité (11.1) un profilé (11.2) de type gouttière pour la réception d'eau s'écoulant du battant de porte pivotante (1).

15. Battant de porte pivotante selon l'une quelconque des revendications 1 à 14, **caractérisé en ce qu'**une feuillure d'étanchéité (12) à base de matériau élastomère est disposée sur le côté inférieur de la baguette d'étanchéité (3) à base de matériau rigide.
